# FASCICULE DE BREVET EUROPEEN

(11) **EP 1 338 167 B1**
(45) Date de publication et mention de la délivrance du brevet: **06.01.2010**
(21) Numéro de dépôt: 01994041.0
(22) Date de dépôt: 09.11.2001
(51) Int. Cl.: H04W 48/04

(54) **PROCEDE DE FILTRAGE DE COMMUNICATIONS DE TELEPHONES MOBILES, ET DISPOSITIF ASSOCIE**
VERFAHREN ZUM FILTERN VON MOBILTELEFONÜBERMITTLUNGEN UND DAMIT ZUSAMMENHÄNGENDE EINRICHTUNG
METHOD FOR FILTERING MOBILE TELEPHONE COMMUNICATIONS AND RELATED DEVICE

(30) Priorité: 09.11.2000 FR 0014397
(43) Date de publication de la demande: 27.08.2003
(73) Titulaire: Chartoleaux KG Limited Liability Company, Wilmington, DE 19808 (US)
(72) Inventeur: CHARLES, Jean-Pierre, F-78280 Guyancourt (FR)
(74) Mandataire: Joly, Jean-Jacques
(86) Numéro de dépôt international: PCT/FR2001/003489
(87) Numéro de publication internationale: WO 2002/039777

(56) Documents cités:
- EP-A- 0 881 851
- EP-A- 0 998 159
- WO-A-96/10893
- WO-A-98/34421
- "DIGITAL CELLULAR TELECOMMUNICATIONS SYSTEM (PHASE 2+);Functions related to Mobile Station (MS) in idle mode(GSM 03.22) ETSI" EUROPEAN TELECOMMUNICATION STANDARD,XX,XX, septembre 1996 (1996-09), XP002173291 cité dans la demande

## Description

La présente invention concerne de manière générale les systèmes de téléphonie mobile.

Plus précisément, l'invention concerne un procédé permettant de filtrer les appels entre un réseau mobile donné, et un téléphone mobile de ce réseau se trouvant en un lieu déterminé.

Et plus précisément encore, l'invention permet de filtrer sur un lieu déterminé les appels d'un réseau particulier, de préférence un réseau fonctionnant selon la norme GSM, ou encore la norme UMTS.

L'essor considérable des téléphones mobiles, s'il constitue à bien des égards un avantage, comporte également certains inconvénients.

En particulier, il serait souhaitable de limiter, voire d'interdire dans certains lieux la communication de ces appareils ; on peut par exemple citer le cas des théâtres, des églises, ou d'autres lieux publics ou privés à l'intérieur desquels il n'est pas souhaitable que les conversations des usagers des mobiles perturbent l'environnement.

Il serait ainsi avantageux de permettre aux opérateurs qui exploitent les réseaux mobiles (par exemple en France Itinéris - marque déposée) de mettre en place un filtrage des appels de leurs abonnés lorsque ceux-ci se trouvent en certains lieux.

Ceci constituerait en effet une amélioration du service rendu par l'opérateur.

On connaît des dispositifs de brouillage large bande qui permettent de neutraliser toutes les communications des téléphones mobiles.

Mais un inconvénient important lié à ces dispositifs est qu'ils neutralisent sans discernement l'ensemble des radiocommunications entrantes et sortantes de tous les appareils sur une très large bande de fréquence, et perturbent le fonctionnement d'appareils n'ayant rien à voir avec le réseau mobile dont il serait souhaitable de filtrer les appels.

En outre, les contraintes réglementaires imposent de ne pas restreindre certains types d'appels, par exemple les appels des utilisateurs de mobile à destination de certains services d'urgence ; les brouilleurs large bande évoqués ci-dessus ne respectent évidemment pas cette obligation légale.

On connaît par ailleurs, par FR 2 764 145 et FR 2 764 144, des dispositifs de brouillage ayant pour but de limiter le volume à brouiller en adaptant la puissance du signal de brouillage en fonction du volume et de la configuration de l'espace à protéger.

Dans ces dispositifs, l'émission du signal de brouillage est faite en balayant les gammes de fréquences utilisées par les radiotéléphones. Mais de tels dispositifs, qui effectuent un brouillage sur l'ensemble des fréquences utilisées par les radiotéléphones, perturbent le fonctionnement général du réseau, en particulier dans les cellules se trouvant à proximité de la zone à protéger.

De plus, dans ce cas le brouillage est « brutal », les utilisateurs pénétrant sur la zone à protéger n'ayant pas la possibilité de terminer leurs communications.

On connaît également par FR 2 779 610 un dispositif de brouillage détectant la présence de mobiles dans une zone donnée. Mais ici encore, le brouillage perturbe le fonctionnement du réseau et ne permet pas aux utilisateurs de terminer leurs communications, ce qui constitue un inconvénient important.

Le document EP-A-0 998 159 décrit la formation d'une zone de contrôle au moyen d'une station de base qui est une par les mobiles se trouvant dans la zone de contrôle comme une station de base normale en ce qui concerne la sélection ou resélection de cellule.

Le but de l'invention est de répondre aux besoins et contraintes évoqués ci-dessus (on verra qu'une application préférée de l'invention concerne le filtrage d'appels sur un réseau fonctionnant selon la norme GSM - on précise toutefois, que l'invention s'applique également aux réseaux fonctionnant suivant des normes analogues à la norme GSM, par exemple la norme UMTS).

Afin d'atteindre ce but, l'invention propose un procédé de filtrage d'appels entre un réseau mobile disposant de canaux de fréquence et des téléphones mobiles déclarés auprès de ce réseau mobile, lorsque les téléphones mobiles se trouvent dans une zone de contrôle, le réseau mobile comportant une pluralité de cellules associées à des relais respectifs émettant chacun des données propres à leur cellule associée selon une voie balise parmi un des canaux de fréquence du réseau, caractérisé en ce que le procédé comprend le paramétrage dans les cellules voisines de la zone de contrôle d'un canal de fréquence du réseau correspondant à un canal d'émission d'un émetteur associé à ladite zone de contrôle, ledit émetteur n'étant pas relié au réseau.

D'autres aspects du procédé selon l'invention sont les suivants :
- ledit émetteur émet sur son canal d'émission selon des canaux logiques similaires à ceux d'une voie balise d'un relais de cellule, en particulier selon un canal logique BCCH,
- l'émission dudit émetteur est prise en compte par les téléphones mobiles se trouvant à l'intérieur de ladite zone de contrôle (N0) comme une émission de voie balise d'une cellule supplémentaire du réseau, de sorte que la zone d'émission dudit émetteur est candidate aux procédures de sélection/resélection, et les appels entrants à destination des mobiles ayant sélectionné/resélectionné l'émetteur de ladite zone de contrôle sont neutralisés,
- aucun récepteur n'est associé audit émetteur, de sorte que lorsqu'un téléphone mobile émet une demande d'accès sur le canal logique RACH dudit canal d'émission, une resélection de cellules voisines sera automatiquement déclenchée, faute de réponse,
- l'émetteur est associé à des moyens de réception aptes à décoder le contenu des messages d'accès aléatoire émis par les téléphones mobiles se trouvant à l'intérieur de la zone de contrôle, de manière à interdire des appels sortants desdits téléphones mobiles vers le réseau,
- les moyens de réception associés à l'émetteur sont aptes à identifier les messages de requête d'accès de type CHANNEL REQUEST émis par un téléphone mobile cherchant à se connecter au réseau,
- l'émetteur est également associé à une mémoire comprenant un fichier de types d'appel, et à des moyens permettant de déterminer la cause de la requête d'accès d'un téléphone mobile, et l'émetteur recevant une requête d'accès de type CHANNEL REQUEST :
   ✔ n'envoie aucune réponse à destination du téléphone mobile,
   provoquant une resélection d'une cellule du réseau par le mobile, dans le cas où la cause de la requête d'accès du
   téléphone mobile correspond à une cause déterminée,
   ✔ émet sur son canal d'émission un message de type IMMEDIATE ASSIGNMENT REJECT indiquant qu'aucune requête n'est acceptable pour le moment, dans le cas où la cause de la requête d'accès du téléphone mobile ne correspond pas à ladite cause déterminée,
      de sorte que l'appel sortant du téléphone mobile ne sera acheminé vers le réseau que si la cause de l'appel correspond à une cause déterminée,
- l'émission dudit émetteur est réalisée selon un tramage temporel de huit intervalles de temps, seul le premier intervalle de temps de chaque trame étant effectivement utilisé pour l'émission de certains canaux logiques,
- l'émetteur émet une liste des voies balises des cellules qui lui sont voisines,
- le paramètre de zone de localisation émis sur le canal d'émission de l'émetteur est identique au paramètre de zone de localisation des voies balises des cellules environnantes,
- il est prévu des moyens pour modifier l'état d'un paramètre émis sur le canal d'émission dudit émetteur, afin de barrer la zone associée à l'émetteur de sorte que les téléphones mobiles campant sur ladite zone associée à l'émetteur resélectionnent automatiquement une nouvelle cellule,
- le canal d'émission dudit émetteur est déclaré dans une liste de voies balises de cellules voisines, pour chaque cellule du réseau se trouvant à proximité dudit émetteur,
- des relais de cellules du réseau diffusent sur le canal BCCH, outre une première liste de voies balises de cellules candidates aux procédures de sélection/resélection, une deuxième liste de voies balises de cellules candidates à la procédure de handover, et le canal d'émission dudit émetteur, mémorisé dans la liste de cellules candidates à la sélection/resélection des cellules voisines, n'est pas mémorisé dans la deuxième liste de ces cellules voisines.

Et l'invention concerne également un dispositif pour la mise en oeuvre d'un tel procédé.

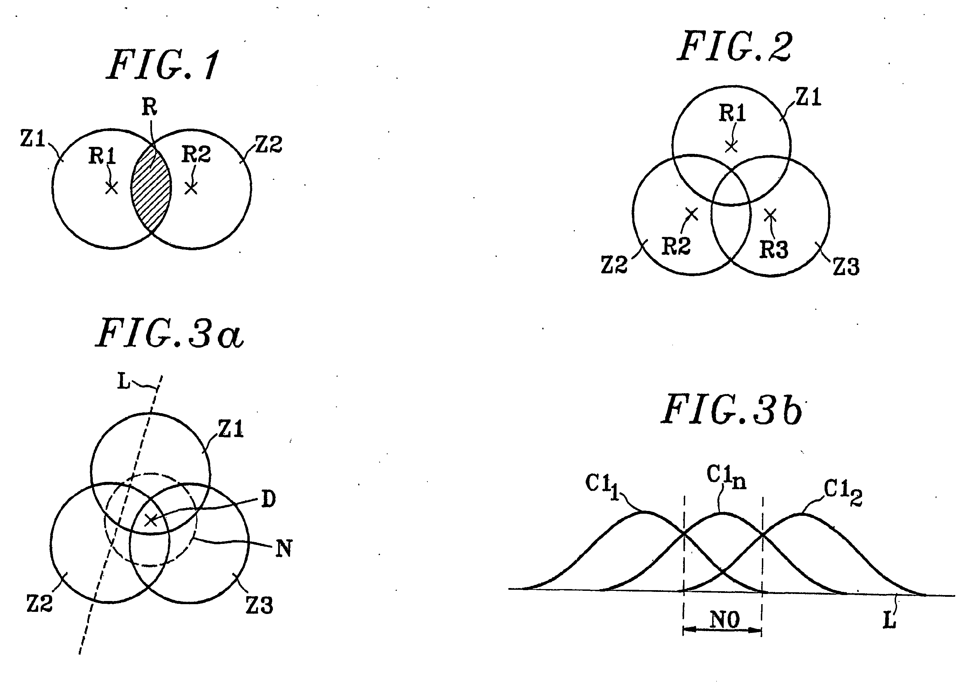

En référence tout d'abord à la figure 1, on va rappeler certaines dispositions du fonctionnement d'un réseau de téléphonie mobile. Le mode de réalisation de l'invention décrit sur la base de ces rappels est un réseau mobile fonctionnant selon la norme GSM, qui comme on l'a dit constitue un champ d'application préféré, mais non limitatif, de l'invention.

A cet effet, on rappelle certains documents de référence décrivant des aspects importants de la norme GSM :
- GSM 05.08 (I-ETS 300 034-1 v. 3.8.0): Digital cellular telecommunication system : Radio subsystem link control (Phase 1),
- GSM 05.08 (ETS 300 578 v. 4.18.2) : Digital cellular telecommunication system : Radio subsystem link control (Phase 2),
- GSM 03.22 (ETS 300 535 v. 4.11.0): Digital cellular telecommunication system : Functions related to mobile station (MS) in idle mode (Phase 2),
- GSM 11.10 (I-ETS 300 020-1 v. 3.18.0) : Digital cellular telecommunication system : Mobile station conformity specifications (Phase 1),
- GSM 11.10-1 (ETS 300 020-1) v. 4.18.0): Digttal cellular telecommunication system : Conformance specifications (Phase 2),
- GSM 04.08 (ETS 300 557 v. 4.23.1): Digital cellular telecommunication system : Mobile radio interface Layer 3 specification (Phase 2).

Sur cette figure, on a représenté schématiquement un premier relais R1 émettant sur une zone géographique ou cellule Z1 des ondes radio permettant de faire communiquer dans le sens montant et descendant un réseau mobile avec des téléphones mobiles.

On a également représenté un deuxième relais, R2, qui couvre une cellule Z2 adjacente à la cellule Z1.

Les relais R1 et R2 obéissent à un ensemble de protocoles dont on va brièvement décrire certains aspects principaux plus loin dans ce texte.

Ces protocoles sont associés à la norme GSM ; toutefois, leurs principes généraux sont également applicables à des réseaux fonctionnant selon d'autres normes, par exemple la norme UMTS.

Un opérateur pourra ainsi faire couvrir par un réseau un territoire géographique donné grâce à une pluralité de cellules Zi analogues aux cellules Z1 et Z2, chaque cellule Zi étant associée à un relais Ri d'émission/réception pour la communication avec les mobiles, chaque relais Ri étant relié au réseau mobile.

Pour assurer une couverture continue de ce territoire, il est nécessaire de prévoir entre deux cellules adjacentes une zone de recouvrement, qui est ici schématiquement représentée par la zone R hachurée.

Un utilisateur abonné au réseau a ainsi la possibilité de communiquer grâce à son mobile avec le réseau, par l'intermédiaire d'un des relais de ce réseau.

Et il est prévu des procédures de changement de relais pour que, dans le cas où l'utilisateur se déplace sur le territoire, son mobile soit associé au relais permettant de communiquer avec le réseau dans le meilleures conditions.

Ces procédures comprennent :
- La procédure de sélection, qui permet au mobile de choisir une cellule du réseau lors de sa mise sous tension,
- La procédure de resélection, qui permet à un mobile déjà sous tension mais ne se trouvant pas en communication de resélectionner une nouvelle cellule du réseau, en particulier lorsque l'utilisateur muni de son mobile se déplace sur le territoire,
- La procédure de transfert automatique intercellulaire (« handover », ou encore HO selon la terminologie anglo-saxonne répandue), pour transférer un mobile en cours de communication vers une nouvelle cellule - et permettre ainsi à l'utilisateur de se déplacer tout en communiquant en permanence avec le réseau dans les meilleures conditions.

Ces procédures sont actives en continu pour chaque cellule et pour chaque mobile du réseau ; elles se réitèrent de manière permanente lorsque le terminal mobile se déplace.

Et un paramètre important qui permet à ces procédures de choisir pour un mobile donné une des cellules du réseau, est le paramètre C1 de niveau de champ reçu par le mobile.

Ce paramètre C1 est défini de la manière suivante :
➢ C1 = (A - Max(B, 0)). Dans cette formule, tous les paramètres sont exprimés en dBm.
   On définit le paramètre A de la manière suivante :
➢ A = (niveau reçu moyenné sur plusieurs itérations des procédures évoquées ci-dessus) - RXLEV_ACCESS_MIN, avec :
   ✔ RXLEV_ACCESS_MIN étant un paramètre défini comme la valeur minimale du niveau reçu permettant d'accéder au réseau.
   On définit le paramètre B de la manière suivante :
➢ B = MS_TXPWR_MAX_CCH - P, avec :
   ✔ MS_TXPWR_MAX_CCH : paramètre correspondant au niveau de puissance minimum autorisé pour le mobile lors de l'accès au réseau,
   ✔ P : puissance maximale de sortie du mobile.

Il est également possible de mettre en oeuvre pour les procédures de sélection/resélection/HO un paramètre différent, représentatif du niveau (exprimé en dB par exemple), et/ou de la qualité de communication entre un mobile et une cellule donnés (application à un réseau UMTS par exemple). Il est également possible de mettre en oeuvre plusieurs paramètres différents suivant la procédure, et suivant les besoins.

A titre d'exemple, certaines versions de la norme GSM mettent par exemple en oeuvre, en combinaison avec le paramètre C1, un paramètre C2 utilisé lors de la resélection.

Ce paramètre C2 est défini de la manière suivante :
➢ C2 = C1 + CELL_RESELECT_OFFSET - TEMPORARY_OFFSET * H(PENALTY_TIME - T) si un paramètre PENALTY_TIME est égal à 11111 (en langage binaire),
➢ C2 = C1 - CELL_RESELECT_OFFSET si le paramètre PENALTY_TIME est différent de 11111, tous les paramètres étant ici encore exprimés en dBm, avec :
   ✔ PENALTY_TIME, CELL_RESELECT_OFFSET et TEMPORARY_OFFSET : paramètres liés à chaque cellule, diffusés par le relais de la cellule sur le canal BCCH de la cellule,
   ✔ T : compteur lié à la cellule, s'incrémentant à partir de 0 jusqu'à la valeur PENALTY_TIME dès que la cellule est inscrite dans une liste BA(BCCH) d'une autre cellule - on donnera ci-dessous une définition du canal BCCH (selon l'acronyme anglo-saxon répandu Broadcast Common Control Channel) et de la liste BA(BCCH) d'une cellule.

Le canal BCCH d'une cellule est diffusé sur un canal radioélectrique choisi parmi les canaux utilisables par le réseau pour permettre aux mobiles de communiquer avec les relais des cellules (la bande GSM primaire comportant ainsi 124 canaux radioélectriques, de largeur 200 KHz chacun).

On peut également désigner le canal radio qui diffuse un canal BCCH par le terme de « voie balise ». Et plus généralement, on désignera indifféremment par les termes « voie balise » et « BCCH » le canal d'émission d'une cellule, et l'émission sur ce canal.

Chaque cellule peut ainsi avoir un canal BCCH particulier, et chaque cellule diffuse une liste BA(BCCH) des cellules voisines sous forme de liste de numéros de canaux radios sur lesquels sont diffusés les BCCH de ces cellules voisines.

A ces fins, l'opérateur du réseau mobile paramètre dans le relais de chaque cellule du réseau la liste BA(BCCH) des BCCH (voies balises) des cellules voisines. Et l'opérateur peut mettre à jour ce paramétrage comme il le désire.

Et ce BCCH sert ainsi à chaque cellule pour diffuser des paramètres tels que les paramètres PENALTY_TIME, CELL_RESELECT_OFFSET et TEMPORARY_OFFSET décrits ci-dessus, ainsi que d'autres paramètres d'état de la cellule, à destination des mobiles susceptibles de communiquer avec la cellule car se trouvant sur la zone associée au BCCH.

Ces autres paramètres d'état comprennent entres autres :
✔ CELL_BAR_ACCESS, paramètre binaire qui peut prendre deux valeurs: 0 si la cellule est disponible pour acheminer les communications des mobiles, 1 si elle est indisponible (on dit alors que la cellule est « barrée »),
✔ CELL_BAR_QUALIFY qui est utilisé lors de la resélection en combinaison avec le paramètre C2 évoqué ci-dessus.

Par ailleurs, chaque cellule tient à jour dans une mémoire qui lui est associée une liste des BCCH des cellules voisines, et diffuse cette liste sur son propre BCCH.

Et chaque cellule dispose également, parmi les canaux du réseau, d'autres canaux logiques que son BCCH, pour acheminer les communications des mobiles.

Sur l'ensemble de ces canaux, les communications se font selon un tramage temporel récurrent de huit intervalles de temps (IT). L'IT initial sera ainsi réservé au BCCH, les 7 IT suivants étant libres pour la communication des mobiles avec le réseau.

Et les émissions/réceptions à l'intérieur de chaque IT sont elles-mêmes organisées en trames logiques par découpage temporel et/ou fréquentiel, définissant ainsi des canaux logiques ; on trouvera ainsi à l'intérieur d'un même IT (qui se répète tous les huit IT) plusieurs canaux logiques, pouvant être dédiés chacun à l'émission ou réception d'informations et de paramètres particuliers.

Ainsi, à l'intérieur du canal BCCH d'une cellule donnée, chacun des différents paramètres diffusés est associé à un canal logique prédéfini.

Et chaque mobile peut en outre mémoriser, dans sa mémoire, une ou plusieurs listes de canaux BCCH - ce qui revient à une ou plusieurs listes de cellules, étant donné que les BCCH des différentes cellules sont déclarés et mémorisés dans une mémoire centrale du réseau.

En particulier, chaque mobile peut mémoriser une liste BA(BCCH) de cellules candidates aux procédures de sélection et de resélection.

Lorsqu'il est en communication avec le réseau, chaque mobile utilise en outre une liste de cellules voisines BA(SACCH) de BCCH candidats uniquement au HO, cette liste étant distincte ou non de la liste BA(BCCH).

On va maintenant exposer brièvement ci-dessous les principales étapes des procédures de sélection et resélection qui constituent un point de départ de l'invention.

La procédure de sélection permet comme on l'a dit de choisir une cellule du réseau lors de sa mise sous tension.

Dans le cas où aucune liste de BCCH n'est mémorisée dans le mobile recherchant une cellule, la procédure de sélection suit les étapes suivantes :
- lors d'une première étape, le mobile balaye l'ensemble des canaux radioélectriques du réseau (par exemple 124 canaux pour un réseau GSM bande primaire, 374 canaux pour un réseau fonctionnant selon la norme DCS 1800, 174 canaux pour la norme GSM bande étendue). Lors de ce balayage, le mobile évalue le niveau de réception de chaque canal et effectue un calcul de niveau reçu moyenné, correspondant au paramètre A évoqué ci-dessus. Ce calcul de niveau reçu moyenné est effectué sur au moins 5 mesures de niveau par canal, effectuées à intervalles réguliers selon une période de 3 à 5 secondes,
- lors d'une deuxième étape, le mobile choisit le canal ayant le niveau reçu moyenné le plus élevé et détermine si ce canal est un canal BCCH d'une cellule;
   ✔ si le canal en question est un BCCH, le mobile essaye de se synchroniser sur ce canal et lit le contenu de ce BCCH. Si les informations lues sur ce BCCH indiquent que la cellule associée est éligible (en particulier paramètre CELL_BAR_ACCESS = 0), alors le mobile choisit cette cellule pour communiquer avec le réseau (on dit que le mobile « campe » sur la cellule). Si cette cellule appartient au réseau du mobile mais n'est pas éligible, le mobile consultera la liste des BCCH de cellules voisines diffusée par cette cellule pour poursuivre sa procédure de sélection,
   ✔ si le canal ayant le niveau reçu moyenné le plus élevé n'est pas un BCCH, alors le mobile choisit le canal dont le niveau moyenné reçu est immédiatement inférieur au canal précédemment choisi, puis réitère la procédure décrite ci-dessus.

Dans le cas maintenant où le mobile a en mémoire, à sa mise sous tension, une liste de BCCH, le mobile utilisera en priorité les canaux de cette liste de BCCH pour conduire la procédure de sélection selon la deuxième étape décrite ci-dessus.

Lors de cette procédure, si une cellule considérée appartient au réseau désiré mais n'est pas éligible, le mobile utilisera la liste des BCCH diffusée par cette cellule pour compléter sa recherche.

Si à l'issue de cette première phase de recherche, à partir de la liste des BCCH que le mobile avait mémorisée, aucune cellule éligible n'a été trouvée, alors le mobile reprend la procédure de sélection comme si aucune liste de BCCH n'avait été mémorisée, en omettant les canaux déjà examinés.

Lors de la sélection initiale, seul le niveau de réception de chaque BCCH est pris en considération. Si le paramètre C1 de la cellule initialement sélectionnée par le mobile se révèle être par la suite inférieur à celui d'une autre cellule éligible, la sélection sera suivie d'une resélection conformément aux étapes décrites ci-dessous.

On va maintenant décrire les principales étapes de la procédure de resélection, qui permet au mobile en veille de choisir, en permanence, la cellule la plus favorable pour communiquer avec le réseau.

A l'issue de la procédure de sélection, le mobile campe sur une cellule, mais il continue à surveiller les BCCH présents dans sa liste BA/(BCCH).

Pour cela, le mobile tient à jour pour chaque BCCH présent dans cette liste, une moyenne glissante du niveau reçu (la durée de l'intervalle de moyennage étant généralement comprise entre 5 et 60 secondes, voire moins pour certaines versions avancées des réseaux).

Le niveau de la cellule de service, sur laquelle campe le mobile, est également surveillé par le mobile, à intervalles réguliers (selon une périodicité n'excédant pas 5 secondes).

Un échantillonnage minimum de 5 mesures est requis pour le calcul de ce niveau moyenné. Pour les autres BCCH présents dans la liste BA/(BCCH) (ceci étant également valable pour la liste de BA/(SACCH)), le même nombre de mesures d'échantillonnage est requis, ces mesures devant être dans la mesure du possible réparties uniformément dans le temps sur la durée de moyennage.

Chaque mobile met ainsi régulièrement à jour la liste des six porteuses BCCH ayant le niveau le plus élevé ; ces six BCCH appartiennent à la liste BA(BCCH) diffusée par la cellule sur laquelle le mobile campe.

Afin de s'assurer qu'il campe sur la cellule la plus appropriée, chaque mobile effectue les opérations suivantes :
- au moins toutes les 5 secondes, le mobile calcule la valeur du paramètre C1 (et éventuellement C2) pour la cellule de service, et pour les six cellules de niveau le plus élevé,
- le mobile resélectionne comme cellule de service une nouvelle cellule si l'une des conditions suivantes est réalisée :
   ✔ le paramètre C1 de la cellule de service devient négatif, pendant une période supérieure à 5 secondes (condition RS1),
   ✔ le mobile détecte un défaut lié à la reconnaissance des messages de paging (condition RS2),
   ✔ la cellule de service passe à l'état « barré », c'est-à-dire que son paramètre CELL_BAR_ACCESS a une valeur égale à 1 (condition RS3),
   ✔ dans le cas où la procédure de resélection utilise le paramètre C2 tel qu'évoqué ci-dessus, le paramètre C2 de l'une des cellules surveillée par le mobile devient supérieur au paramètre C2 de la cellule de service pendant une période supérieure à 5 secondes. Si cette nouvelle cellule appartient à une nouvelle zone de localisation, le paramètre C1 de cette nouvelle cellule doit excéder, pendant une période supérieure à 5 secondes, le paramètre C1 de la cellule de service initiale d'une quantité au moins égale à une valeur prédéterminée, enregistrée dans un paramètre CELL_ RESELECT_HYSTERESIS. Ce dernier paramètre, diffusé par le BCCH de chaque cellule, peut avoir une valeur comprise entre 0 et 14 dB par pas de 2dB (condition RS4),
   ✔ les tentatives d'accès du mobile auprès de la cellule de service restent infructueuses après un nombre d'essais supérieur à une valeur prédéfinie MAX_RETRANS ; ainsi si pour une raison quelconque la cellule de service « ne répond pas » au mobile, ce dernier reprend la procédure de resélection pour rechercher une nouvelle cellule de service (condition RS5).

On notera que dans le cas où la condition RS4 évoquée ci-dessus est mise en oeuvre (ce qui implique que le réseau exploite le paramètre C2), une resélection d'une nouvelle cellule de service ne peut intervenir qu'après un délai de 15 secondes.

Dans le cas d'une resélection sur la base d'une des autres conditions évoquées ci-dessus, la resélection est immédiate ; toutefois, le retour du mobile sur la cellule de service initiale n'est possible qu'après l'écoulement d'un délai de 5 secondes.

Lorsque le mobile a identifié une nouvelle cellule de service par la procédure de resélection, il lit le canal BCCH de cette nouvelle cellule afin de s'assurer que les paramètres de cette cellule affectant la resélection n'ont pas changé.

Si tel n'est pas le cas et qu'un de ces paramètres a été modifié depuis sa première lecture par le mobile lors de la procédure de resélection, le mobile doit vérifier que la condition de resélection est toujours remplie.

Et dans le cas où la resélection se traduit par un changement de zone de localisation (la zone de localisation étant un niveau de groupement intermédiaire de cellules d'un réseau), une procédure de mise à jour de zone de localisation est effectuée.

Il est également possible de favoriser ou de défavoriser la resélection de certaines cellules par l'intermédiaire d'un paramètre CELL-RESELECT_OFFSET, qui est également diffusé par le canal BCCH de chaque cellule.

Ce paramètre peut être positif ou négatif en fonction de la valeur prise par le paramètre PENALTY_TIME évoqué ci-dessus.

Les procédures décrites ci-dessus permettent ainsi à un mobile de communiquer dans les meilleures conditions possibles avec un réseau donné. On va maintenant décrire ci-dessous les dispositions spécifiques du procédé et du dispositif selon l'invention permettant de répondre de manière efficace aux objectifs de l'invention tels qu'exposés en l'introduction de la présente demande.

Selon une première variante de réalisation de l'invention, il est possible d'interdire, sur une zone géographique donnée, l'acheminement de tous les appels d'un réseau donné à destination des mobiles communiquant habituellement avec ce réseau.

Une telle interdiction peut en outre être temporaire, l'interdiction pouvant être levée ou établie à tout moment désiré.

La figure 2 est une vue analogue à la figure 1, sur laquelle on a également représenté en vue de dessus schématique trois cellules Z1, Z2, Z3 auxquelles sont associés trois relais respectifs R1, R2, R3. On retrouve sur cette figure les zones de recouvrement intercellulaire qui permettent d'obtenir une couverture continue d'un territoire par les relais du réseau.

La figure 3a reprend les trois cellules Z1, Z2, Z3 de la figure 2. Cette figure représente également en parallèles une zone N, située ici au centre des cellules Z1, Z2 et Z3.

La zone N couvre une aire qui est habituellement couverte par au moins un des relais R1, R2, R3.

On précise que l'ensemble des cellules et des zones des figures 1 à 3a sont représentées dans un souci de schématisation sous la forme de disques circulaires réguliers, la forme et la taille de chacune de ces zones pouvant en réalité être adaptées selon la topographie locale, et les caractéristiques de propagation à l'intérieur de chaque cellule.

La zone N contient un lieu à l'intérieur duquel on souhaite effectuer un contrôle des communications ; ce lieu peut être, comme évoqué en introduction de la présente demande, par exemple un théâtre, une église, etc.

On a placé au centre de la zone N que l'on souhaite ainsi protéger (en totalité, ou partiellement, selon les puissances relatives d'émission des différents relais mis en oeuvre) un dispositif D permettant d'émettre une voie balise qui lui est propre sur un des canaux de fréquence du réseau considéré.

Cette émission a toutes les caractéristiques d'une émission sur un canal BCCH par le relais d'une des cellules du réseau, c'est-à-dire qu'elle comporte tous les canaux logiques d'une telle émission, et les paramètres habituellement diffusés sur un canal BCCH.

Par ailleurs, selon un aspect important de l'invention, l'opérateur du réseau mobile paramètre les relais de chaque cellule du réseau mobile situés à proximité du dispositif D, de manière à intégrer dans la liste BA(BCCH) de chacune de ces cellules le « faux BCCH » associé à l'émission du dispositif D.

Et de la sorte, le canal d'émission du dispositif D est mémorisé, par les cellules voisines du dispositif D, comme un BCCH de cellule supplémentaire.

Toutefois, le dispositif D n'est dans aucune forme de réalisation de l'invention relié au réseau ; il fonctionne de manière totalement autonome.

La zone N est ainsi considérée comme une cellule supplémentaire. En outre, l'opérateur du réseau contrôle l'ensemble des paramètres qui sont diffusés sur la voie balise de la zone N, qui constitue un « faux BCCH ».

On notera qu'un tel dispositif ne peut être mis en oeuvre que par l'opérateur du réseau, car le dispositif utilise l'une des fréquences qui sont mises à sa disposition dans le cadre d'une licence d'opérateur mobile ; en outre le paramétrage de ce dispositif nécessite la connaissance des caractéristiques de ce réseau particulier.

La puissance émise par le dispositif D déterminera le rayon d'action de ce dispositif, et pourra donc être ajustée en fonction des besoins.

Ainsi, le dispositif D émet à la manière d'un relais d'une cellule sur un tramage temporel de huit intervalles de temps, seul le premier intervalle de temps étant effectivement utilisé pour l'émission des canaux logiques de ce « faux BCCH ».

D émettra ainsi sur ce canal une liste BA(BCCH) des BCCH des cellules voisines, cette liste ayant été paramétrée par l'opérateur comme toutes les autres données émises par le dispositif D.

Et un mobile se trouvant à proximité du dispositif D et cherchant à se connecter au réseau croira ainsi reconnaître une cellule supplémentaire du réseau, l'ensemble des paramètres diffusés par D étant cohérents avec les caractéristiques des autres cellules, en particulier voisines.

Le paramètre de LAC (Location Area Code) doit ainsi être identique à celui des cellules environnantes, pour éviter toute mise à jour de localisation lorsque des mobiles en veille pénètrent dans la zone couverte par le dispositif D.

La zone N joue ainsi le rôle d'une « cellule fantôme », qui peut être choisie par les mobiles se trouvant à proximité lors des procédures de sélection/resélection. Toutefois, le dispositif D qui n'est aucunement relié au reste du réseau n'est dans cette première variante de réalisation de l'invention qu'un leurre qui se limite à émettre.

Et cette « cellule » N, lorsqu'elle est sélectionnée par un mobile au terme d'une sélection ou d'une resélection, ne fait aboutir aucun appel au mobile de sorte que les communications entrantes à destination de ce mobile ne peuvent aboutir car la « cellule » fantôme N n'est pas reliée au réseau.

La figure 3b illustre schématiquement la répartition des niveaux de champ associés respectivement à la cellule Z1 (niveau C1₁), à la zone N (niveau C1_{N}), et à la cellule Z2 (niveau C1₂), suivant une ligne L qui est représentée sur la figure 3a et qui traverse une partie de la zone N.

On constate sur cette figure qu'il existe une zone centrale à l'intérieur de laquelle le niveau de champ C1_{N} associé à l'émission du dispositif D est supérieur aux niveaux de champ C1₁ et C1₂ des relais des cellules voisines ; à l'intérieur de cette zone centrale, notée N0 sur la figure 3b, ce sera donc la « cellule fantôme » associée à l'émetteur D qui sera choisi par les mobiles lors des procédures de sélection/resélection.

Et une fois cette « cellule fantôme » choisie par un mobile, le mobile ne fera qu'écouter les données émises sur le faux BCCH de D, les sept intervalles de temps normalement associés à la communication avec le réseau dans le cas d'une cellule normale étant inactifs.

Ainsi, le mobile recevra sur le premier intervalle de temps des informations analogues à celles d'un BCCH et « croira » ainsi être relié au réseau, mais il ne pourra en réalité recevoir des appels du réseau.

On comprend donc qu'un mobile hors tension ou en veille pénétrant dans la zone N0 ne pourra recevoir aucun appel du réseau, tant qu'il campera sur la « cellule » N.

Et il est possible selon l'invention de paramétrer à volonté les données émises sur le faux BCCH de la « cellule fantôme » ; en particulier il est possible de modifier le paramètre CELL_BAR_ACCESS de cette « cellule » N de manière à la barrer à volonté.

Dans le cas où la « cellule » N est ainsi barrée, par exemple par suite d'une manipulation de l'opérateur sur le dispositif (en actionnant un interrupteur, ou en programmant une instruction spécifique dans une mémoire associée au dispositif), ou simplement par un client ayant demandé à l'opérateur d'installer le dispositif D au coeur de la zone N, les mobiles campant précédemment sur cette « cellule » N resélectionneront automatiquement une nouvelle cellule de l'opérateur, la condition RS3 évoquée ci-dessus étant remplie, et pourront de nouveau recevoir des appels entrants.

Par ailleurs, le faux BCCH d'émission du dispositif D devra être déclaré dans la liste de cellules voisines BA (BCCH) émise par chacune des vraies cellules du réseau se trouvant à proximité, ce qui permet la sélection/resélection de la « cellule » N par un mobile entrant dans la zone N0 à protéger.

Un mobile en veille pénétrant dans la zone couverte par le dispositif campera ainsi sur la zone N dès que le paramètre C1_{N} sera supérieur au paramètre des niveaux de champ des cellules voisines, c'est-à-dire dès que le mobile se trouvera à l'intérieur de la zone N0, qui constitue la zone de contrôle effectif.

Et lorsque le même mobile campant sur la zone N sortira de la zone N0, la procédure de resélection qui est itérative s'appliquera de nouveau, de manière à allouer au mobile une nouvelle cellule du réseau où il pourra de nouveau recevoir des appels entrants et communiquer avec le réseau sans restriction particulière.

Dans le cas d'un mobile pénétrant dans la zone N0 alors qu'il est en communication, et si l'opérateur utilise des listes BA(SACCH) différentes des listes de BA(BCCH) utilisées pour les procédures de sélection/resélection, il est possible de permettre au mobile de terminer sa communication avant de le faire camper sur la zone **N**.

Pour cela, on choisira de ne pas déclarer le faux BCCH de la « cellule » N dans les listes de BA(SACCH) des cellules voisines de cette zone, de manière à éviter toute tentative de handover vers cette « cellule » N.

Dans le cas maintenant d'un mobile mis sous tension alors qu'il se trouve déjà dans la zone N0, la sélection initiale peut conduire à ce que le mobile campe de façon temporaire sur une cellule différente de la « cellule » N (par exemple dans le cas où le mobile a mémorisé une liste BA(BCCH) avant sa mise hors tension).

Cependant, dans ce cas, la procédure de resélection conduira rapidement le mobile à camper sur cette « cellule » N, grâce notamment à la diffusion par les cellules voisines de listes BA(BCCH) contenant le faux BCCH de cette « cellule » N.

On a vu que l'invention permettait ainsi de filtrer de manière efficace les communications à destination des mobiles associés à un réseau donné, à l'intérieur d'une zone désirée.

On notera par ailleurs qu'un aspect avantageux de l'invention est que sa mise en oeuvre ne perturbe pas le fonctionnement général du réseau mobile.

Lorsque maintenant un utilisateur souhaite appeler par l'intermédiaire de ce réseau alors qu'il se trouve dans la zone N0, étant donné que le mobile campe sur la « cellule » N, il émet à destination de cette « cellule » N une demande d'accès sur le canal logique RACH (qui est le canal logique permettant d'initier les communications sur l'intervalle de temps numéro 0 du faux BCCH).

Ces demandes d'accès seront infructueuses car la « cellule » N ne dispose pas de récepteur pour recevoir et traiter une telle demande d'accès.

Une fois atteint un nombre maximum prédéfini de tentatives d'accès, correspondant au paramètre MAX_RETRANS, une resélection de cellule est automatiquement déclenchée, la condition RS5 étant remplie.

Ainsi le mobile campera sur une des cellules voisines de la « cellule » N et il pourra accéder de nouveau au réseau par l'intermédiaire de cette nouvelle cellule qui est déclarée dans la liste BA(BCCH) de la « cellule » N.

Une fois la communication achevée, le mobile reviendra camper sur la « cellule » N du fait des itérations de la procédure de resélection.

Ainsi la première variante de l'invention exposée ci-dessus permet d'interdire, à des mobiles d'un réseau donné se trouvant en un lieu où l'on désire filtrer les communications, de recevoir des appels entrants, mais autorise ces mêmes mobiles à appeler par l'intermédiaire du réseau.

Dans une deuxième variante de l'invention qui reprend les dispositions de la première variante exposée ci-dessus en ce qui concerne les appels entrants (de sorte que les mobiles associés à un réseau donné ne peuvent recevoir des appels de ce réseau lorsqu'ils se trouvent dans une zone que l'on veut contrôler), on interdit en outre aux mobiles du réseau d'effectuer des appels à destination de leur réseau lorsqu'ils se trouvent dans cette zone à contrôler.

Toutefois, on prévoit comme on va l'expliquer ci-dessous des dispositions pour permettre à ces mobiles de passer certains appels même lorsqu'ils se trouvent dans la zone contrôlée. Ceci permet en particulier de remplir certaines obligations réglementaires, imposant le libre accès permanent des mobiles à des numéros d'urgence.

Dans cette variante de l'invention, le dispositif D décrit ci-dessus n'est pas un simple émetteur, mais dispose également d'un récepteur simplifié permettant de décoder le contenu des messages d'accès aléatoire émis par les mobiles sur le canal RACH.

Le récepteur du dispositif D peut ainsi identifier les messages de type CHANNEL REQUEST émis par un mobile cherchant à se connecter au réseau. Ce message CHANNEL REQUEST est émis par les mobiles du réseau sur un canal logique RACH de la cellule - véritable ou « fantôme » - sur laquelle le mobile campe.

Ainsi, la requête d'accès au réseau d'un mobile campant sur la « cellule » N par suite des procédures de sélection/resélection sera identifiée par le dispositif D.

Et les messages CHANNEL REQUEST émis sur le canal logique RACH comportent deux parties :
- une première partie comportant un paramètre de cause d'appel décrivant la nature de la communication que le mobile requiert. Ce paramètre peut ainsi prendre différentes valeurs connues du mobile et du réseau, chaque valeur correspondant à une cause d'appel : appel d'urgence, rétablissement d'appel, réponse à un message de paging, demande de canal de communication, demande de canal d'un autre type (signalisation), mise à jour de localisation, etc...
- une deuxième partie comportant une référence permettant d'identifier le mobile. Cette partie permet au relais du réseau - ou ici au récepteur du dispositif D - qui reçoit le CHANNEL REQUEST d'identifier et de reconnaître chaque mobile.

Et le dispositif D peut, grâce au fichier de types d'appel recopié dans sa mémoire, déterminer la cause de la requête d'accès d'un mobile qui campe sur la « cellule » N et qui cherche à appeler le réseau par l'intermédiaire de cette « cellule ».

Si la valeur du paramètre de cause d'appel correspond à un appel d'urgence, (CHANNEL REQUEST commençant par « 101 »), le dispositif D n'envoie aucune réponse à destination du mobile, provoquant ainsi une resélection d'une autre cellule par le mobile car la condition RS5 est alors remplie, de sorte que l'appel d'urgence sera acheminé vers le réseau par cette autre cellule.

Si maintenant le paramètre de cause d'appel correspond à une cause différente, l'émetteur du dispositif D émet sa voie balise un message IMMEDIATE ASSIGNMENT REJECT, qui indique qu'aucune ressource n'est disponible.

Dans ce cas le mobile « croit » que la cellule avec laquelle il cherche à communiquer est indisponible. Le mobile attend alors pendant une durée de temporisation T3122, fixée par l'opérateur et pouvant être comprise entre 0 et 255 secondes dans le cas de la norme GSM, avant d'émettre un nouveau message CHANNEL REQUEST sur le canal logique RACH de la « cellule » N.

Et si le mobile persiste à l'issue de cette durée T3122 et émet un nouveau CHANNEL REQUEST à destination de la « cellule » N, le dispositif D reconnaîtra encore la cause de la requête et émettra de nouveau un message IMMEDIATE ASSIGNMENT REJECT à destination du mobile (le mobile étant reconnu par l'émetteur du dispositif D grâce à la deuxième partie du message CHANNEL REQUEST, ce qui permet à l'émetteur du dispositif D d'émettre à destination de ce mobile particulier).

Il est évidemment possible de définir d'autres types d'appels devant être acheminés en provoquant une resélection, chacune des différentes valeurs du paramètre de cause d'appel mémorisées par le dispositif pouvant être marquée dans la mémoire de D comme devant donner lieu à resélection pour acheminement de l'appel, ou non.

Ainsi, dans cette deuxième variante de l'invention on interdit aux mobiles associés à un réseau donné l'accès à ce réseau lorsque les mobiles sont dans une zone donnée, certains types d'appels pouvant toutefois être acheminés.

Et on rappelle également que si l'invention a été décrite ci-dessus plus particulièrement en référence à la norme GSM, son application à des réseaux fonctionnant selon d'autres versions de cette norme, ou d'autres normes, par exemple la norme UMTS, est naturellement envisageable. Ainsi, les valeurs numériques figurant dans cette description sont relatives aux versions actuelles des normes visées, et ne constituent en aucun cas une limitation de l'invention.

## Revendications

1. Procédé de filtrage d'appels entre un réseau mobile disposant de canaux de fréquence et des téléphones mobiles déclarés auprès de ce réseau mobile, lorsque les téléphones mobiles se trouvent dans une zone (NO) de contrôle, le réseau mobile comportant une pluralité de cellules (Zi) associées à des relais respectifs (Ri) émettant chacun des données propres à leur cellule associée selon une voie balise parmi un des canaux de fréquence du réseau,
**caractérisé en ce que** le procédé comprend le paramétrage dans des cellules voisines de la zone de contrôle d'un canal de fréquence du réseau correspondant à un canal d'émission d'un émetteur (D) associé à ladite zone de contrôle, l'émetteur n'étant pas relié au réseau et étant associé à une mémoire comprenant un fichier de types d'appels,
ledit émetteur (D) émettant sur son canal d'émission selon des canaux logiques similaires à ceux d'une voie balise d'un relais (Ri) de cellule (Zi), en particulier selon un canal logique BCCH, l'émission dudit émetteur étant prise en compte par les téléphones mobiles se trouvant à l'intérieur de ladite zone de contrôle (NO) comme une émission de voie balise d'une cellule supplémentaire du réseau, de sorte que la zone d'émission dudit émetteur est candidate aux procédures desélection/resélection, et les appels entrants à destination des mobiles ayant sélectionné/resélectionné l'émetteur de ladite zone de contrôle sont neutralisés,
et en ce le procédé identifie dans des moyens de réception associés à l'émetteur (D) le paramètre de cause d'appel dans les messages de requête d'accès de type CHANNEL REQUEST émis par un téléphone mobile cherchant à se connecter au réseau, et en fonction dudit paramètre de cause d'appel par rapport audit fichier de type d'appel ledit émetteur :
• n'envoie aucune réponse à ladite requête d'accès à destination du téléphone mobile, provoquant une resélection d'une cellule du réseau par le mobile, dans le cas où ledit paramètre de la cause de la requête d'accès du téléphone mobile correspond à une cause déterminée dudit fichier de type d'appel
• émet sur son canal d'émission un message de type IMMEDIATE ASSIGNMENT REJECT indiquant qu'aucune requête n'est acceptable pour le moment, dans le cas où la cause de la requête d'accès du téléphone mobile ne correspond pas à ladite cause déterminée,
de sorte que l'appel sortant du téléphone mobile ne sera acheminé vers le réseau que si la cause de l'appel correspond à une cause déterminée.

2. Procédé selon la revendication précédente, **caractérisé en ce que** l'émission dudit émetteur (D) est réalisée selon un tramage temporel de huit intervalles de temps, seul le premier intervalle de temps de chaque trame étant effectivement utilisé pour l'émission de certains canaux logiques.

3. Procédé selon l'une des revendications précédentes, **caractérisé en ce que** l'émetteur (D) émet une liste des voies balises des cellules qui lui sont voisines.

4. Procédé selon l'une des revendications précédentes, **caractérisé en ce que** le paramètre de zone de localisation émis sur le canal d'émission de l'émetteur (D) est identique au paramètre de zone de localisation des voies balises des cellules environnantes.

5. Procédé selon l'une des revendications précédentes, **caractérisé en ce qu'**il est prévu des moyens pour modifier l'état d'un paramètre émis sur le canal d'émission dudit émetteur, afin de barrer la zone associée à l'émetteur de sorte que les téléphones mobiles campant sur ladite zone associée à l'émetteur resélectionnent automatiquement une nouvelle cellule (Zi).

6. Procédé selon l'une des revendications précédentes, **caractérisé en ce que** le canal d'émission dudit émetteur (D) est déclaré dans une liste de voies balises de cellules voisines, pour chaque cellule (Zi) du réseau se trouvant à proximité dudit émetteur.

7. Procédé selon la revendication précédente, **caractérisé en ce que** des relais (Ri) de cellules (Zi) du réseau diffusent sur le canal BCCH, outre une première liste de voies balises de cellules candidates aux procédures de sélection/resélection, une deuxième liste de voies balises de cellules candidates à la procédure de handover, et le canal d'émission dudit émetteur, mémorisé dans la liste de cellules candidates à la sélection/resélection des cellules voisines, n'est pas mémorisé dans la deuxième liste de ces cellules voisines.

## Claims

1. A method of filtering calls between a mobile network provided with frequency channels and mobile telephones registered with this mobile network, when the mobile telephones are located in a control area (N0), the mobile network comprising a plurality of cells (Zi) associated with respective relays (Ri) each transmitting data specific to their associated cell through a beacon channel among one of the frequency channels of the network,
**characterized in that** the method includes the parametering in neighboring cells of a control area of a frequency channel of the network corresponding to a transmission channel of a transmitter (D) associated with said control area, said transmitter not being connected to the network, and being associated with a memory including a call types file,
said transmitter (D) transmitting on its transmission channel through logical channels similar to those of a beacon channel of a cell (Zi) relay (Ri), in particular through a BCCH logical channel, the transmission of said transmitter is accepted by the mobile telephones located within said control area (N0) as a beacon channel transmission of an additional cell of the network, so that the transmission area of said transmitter is a candidate for the selection/reselection procedures, and the incoming calls to mobiles having selected/reselected the transmitter of said control area are neutralized,
and **in that** said method identifies in reception means associated with the transmitter (D) the call reason parameter in the CHANNEL REQUEST type access request messages transmitted by a mobile telephone seeking to be connected to the network, and in accordance with said call reason parameter with respect to said call types file, said transmitter:
• does not send any response to the access request to the mobile telephone, causing a reselection of a network cell by the mobile, in the event that said parameter of the reason for the mobile telephone's access request corresponds to a determined reason of said call types file,
• transmits on its transmission channel an IMMEDIATE ASSIGNMENT REJECT type message indicating that no request is acceptable at the moment, in the event that the reason for the mobile telephone's access request does not correspond to said determined reason,
so that the outgoing call from the mobile telephone will only be routed to the network if the reason for the call corresponds to a determined reason.

2. The method as claimed in the preceding claim, **characterized in that** the transmission of said transmitter (D) is performed according to a time framing of eight time intervals, only the first time interval of each frame actually being used for the transmission of certain logical channels.

3. The method as claimed in one of the preceding claims, **characterized in that** the transmitter (D) transmits a list of beacon channels of cells which are its neighbors.

4. The method as claimed in one of the preceding claims, **characterized in that** the location area parameter transmitted on the transmitter's (D) transmission channel is identical to the location area parameter of the beacon channels of the surrounding cells.

5. The method as claimed in one of the preceding claims, **characterized in that** means are provided for changing the state of a parameter transmitted on the transmission channel of said transmitter, in order to bar the area associated with the transmitter so that the mobile telephones camping on said area associated with the transmitter automatically reselect a new cell (Zi).

6. The method as claimed in one of the preceding claims, **characterized in that** the transmission channel of said transmitter (D) is registered in a list of beacon channels of neighboring cells, for each cell (Zi) of the network located close to said transmitter.

7. The method as claimed in the preceding claim, **characterized in that** network cell (Zi) relays (Ri) broadcast on the BCCH channel, in addition to a first list of beacon channels of candidate cells for selection/reselection procedures, a second list of beacon channels of candidate cells for the handover procedure, and the transmission channel of said transmitter, stored in the list of candidate cells for selection/reselection of the neighboring cells, is not stored in the second list of these neighboring cells.

## Patentansprüche

1. Verfahren zum Filtern von Anrufen zwischen einem über Frequenzkanäle verfügenden Mobilfunknetz und bei diesem Mobilfunknetz angemeldeten Mobiltelefonen, wenn die Mobiltelefone sich in einem Kontrollbereich (NO) befinden,
wobei das Mobilfunknetz eine Vielzahl von Zellen (Zi) umfaßt, die jeweiligen Relais (Ri) zugeordnet sind, die ihrer zugeordneten Zelle entlang eines Signalisierungskanals aus einem der Frequenzkanäle des Netzes jeweils eigene Daten senden,
**dadurch gekennzeichnet, daß** das Verfahren das Parametrieren in Nachbarzellen des Kontrollbereichs eines Frequenzkanals des Netzes, der einem Sendekanal eines dem Kontrollbereich zugeordneten Senders (D) entspricht, umfaßt,
wobei der Sender nicht mit dem Netz verbunden ist und einem Speicher zugeordnet ist, der eine Datei vom Typ Anrufdatei enthält,
wobei der Sender (D) über seinen Sendekanal entlang von logischen Kanälen sendet, die denjenigen eines Signalisierungskanals eines Relais (Ri) einer Zelle (Zi) ähnlich sind, insbesondere entlang einem logischen BCCH-Kanal, wobei das Senden des Senders durch die Mobiltelefone, die sich innerhalb des Kontrollbereichs (NO) befinden, als ein Signalisierungskanal-Senden einer zusätzlichen Zelle des Netzes erfaßt wird, so daß der Sendebereich des Senders Kandidat für die Auswahl-/Wiederauswahlverfahren ist, und die eingehenden Anrufe für die Mobiltelefone, welche den Sender des Kontrollbereichs ausgewählt/erneut ausgewählt haben, neutralisiert werden, und
daß das Verfahren in Empfangsmitteln, welche dem Sender (D) zugeordnet sind, den Parameter des Anrufgrunds in den Zugangsanfragenachrichten vom Typ CHANNEL REQUEST identifiziert, die von einem Mobiltelefon gesandt werden, das versucht, mit dem Netz eine Verbindung aufzubauen, und daß in Abhängigkeit des Parameters des Anrufgrunds verglichen mit der Anrufdatei:
in dem Fall, in dem der Parameter des Grundes der Zugangsanfrage des Mobiltelefons einem bestimmten Grund der Anrufdatei entspricht, der Sender dem Mobiltelefon keine Antwort auf die Zugangsanfrage sendet, wodurch es zu einem erneuten Auswählen einer Zelle des Netzes durch das Mobiltelefon kommt,
- in dem Fall, in dem der Grund der Zugangsanfrage des Mobiltelefons nicht dem bestimmten Grund entspricht, der Sender über seinen Sendekanal eine Nachricht vom Typ IMMEDIATE ASSIGNMENT REJECT sendet, die anzeigt, daß momentan keine Anfrage annehmbar ist,
so daß der von dem Mobiltelefon abgehende Ruf an das Netz nur weitergeleitet wird, wenn der Grund des Anrufs einem bestimmten Grund entspricht.

2. Verfahren nach dem vorhergehen Anspruch, **dadurch gekennzeichnet, daß** das Senden des Senders (D) entsprechend einer Zeitrasterung von acht Zeitintervallen realisiert wird, wobei lediglich das erste Zeitintervall eines jeden Rasters tatsächlich für das Senden einiger logischer Kanäle verwendet wird.

3. Verfahren nach einem der vorhergehenden Ansprüche, **dadurch gekennzeichnet, daß** der Sender (D) eine Liste der Signalisierungskanäle der Zellen, die ihm benachbart sind, sendet.

4. Verfahren nach einem der vorhergehenden Ansprüche, **dadurch gekennzeichnet, daß** der Lokalisierungsbereich-Parameter, der über den Sendekanal des Senders (D) gesendet wird, mit dem Lokalisierungsbereich-Parameter der Signalisierungskanäle der umliegenden Zellen identisch ist.

5. Verfahren nach einem der vorhergehenden Ansprüche, **dadurch gekennzeichnet, daß** Mittel für die Änderung des Zustands eines über den Sendekanal des Senders gesendeten Parameters vorgesehen sind, um den dem Sender zugeordneten Bereich zu sperren, so daß die sich in dem dem Sender zugeordneten Bereich befindenden Mobiltelefone automatisch eine neue Zelle (Zi) auswählen.

6. Verfahren nach einem der vorhergehenden Ansprüche, **dadurch gekennzeichnet, daß** der Sendekanal des Senders (D) in einer Liste von Signalisierungskanälen von Nachbarzellen, für jede Zelle (Zi) des Netzes, die sich in der Nähe des Senders befindet, angegeben ist.

7. Verfahren nach dem vorhergehenden Anspruch, **dadurch gekennzeichnet, daß** Relais (Ri) von Zellen (Zi) des Netzes über den BCCH-Kanal, neben einer ersten Liste von Signalisierungskanälen von Zellen, die Kandidaten für die Auswahl-/Wiederauswahlverfahren sind, eine zweite Liste von Signalisierungskanälen von Zellen, die Kandidaten für das Handover-Verfahren sind, senden, und daß der Sendekanal des Senders, der in der Liste von Zellen, die Kandidaten für die Auswahl/Wiederauswahl der Nachbarzellen sind, gespeichert ist, nicht in der zweiten Liste dieser Nachbarzellen gespeichert ist.
